# EUROPÄISCHE PATENTSCHRIFT

(11) **EP 2 550 151 B1**
(45) Veröffentlichungstag und Bekanntmachung des Hinweises auf die Patenterteilung: **16.10.2013**
(21) Anmeldenummer: 11708738.7
(22) Anmeldetag: 16.03.2011
(51) Int. Cl.: B29C 44/12, B29C 44/14, B29C 44/58, B29C 70/08, B29C 70/46, B29C 44/08, B32B 5/20, B29C 33/68

(54) **VERFAHREN ZUR FERTIGUNG EINES SMC-MEHRSCHICHT-BAUTEILS**
METHOD FOR PRODUCING AN SMC MULTI-LAYER COMPONENT
PROCÉDÉ POUR FABRIQUER UN COMPOSANT MULTICOUCHES SMC

(30) Priorität: 09.04.2010 DE 102010014398; 25.03.2010 DE 102010012870
(43) Veröffentlichungstag der Anmeldung: 30.01.2013
(73) Patentinhaber: Daimler AG, 70327 Stuttgart (DE)
(72) Erfinder: GOEDECKE, Jens, 65824 Schwalbach (DE); ILZHÖFER, Karl-Heinz, 73230 Kirchheim (DE)
(74) Vertreter: JENSEN & SON
(86) Internationale Anmeldenummer: PCT/EP2011/001278
(87) Internationale Veröffentlichungsnummer: WO 2011/116890

(56) Entgegenhaltungen:
- EP-A1- 2 018 948
- DE-A1- 10 123 176
- REIMER U ET AL: "ONE-STEP-SANDWICH-SMC VERFAHREN ZUR HERSTELLUNG VON LEICHTEN FAHRZEUGTEILEN", KUNSTSTOFFE, CARL HANSER VERLAG, MUNCHEN, DE, Bd. 89, Nr. 6, 1. Juni 1999 (1999-06-01), XP000958172, ISSN: 0023-5563

## Beschreibung

Die Erfindung betrifft ein Verfahren zur Fertigung von SMC-Mehrschicht-Bauteilen.

Es ist bekannt, Leichtbauteile zum Einsatz in Anwendungsgebieten, die große mechanische Beanspruchungen mit sich bringen, aus einem duromeren Verbundwerkstoffsystem, auch als Sheet Moulding Compound (SMC) bezeichnet, zu fertigen. Dabei werden duroplastische Reaktionsharze wie Polyester- oder Vinylesterharze mit Füllstoffen und Additiven sowie Fasern, bevorzugt Glasfasern, angeteigt, in Form, etwa in Folienform gebracht und als verarbeitungs-, respektive umformungsbereite Halbzeuge bereitgestellt, die zum fertigen Bauteil weiter verarbeitet werden können. Die Komposition stellt leichte, aber widerstandsfähige, stabile und belastbare Komponenten zur Fertigung von für Kraft- und Nutzfahrzeuge geeigneten Mehrschichtbauteilen zur Verfügung, wobei bei es bei Mehrschichtbauteilen, die weitere Materiallagen neben einer oder mehreren stabilisierenden SMC-Lagen aufnehmen, erforderlich ist, dass die Lagen mit den Zwischenschichten in komplexen Fügeoperationen miteinander verbunden werden.

Mehrschichtmaterialien zur Fertigung von leichten Mehrschichtbauteilen wie etwa von einem Vorformteil für einen Autohimmel und ein entsprechendes Herstellungsverfahren werden in der DE 199 56 152 C2 offenbart. Die dort bearbeitete Aufgabe der Vereinfachung der Herstellung von Mehrschichtmaterialien wird dadurch gelöst, dass ein Schaumkunststoff mit einer Faserverstärkung und mindestens einer Decklage versehen wird, indem die Kreuzungspunkte des Faservlieses mit einem thermoplastischen Bindemittel festgelegt sind und dass das Faservlies mit einer fließfähigen Masse aus einer Schaum bildenden Komponente beaufschlagt und dann durch eine Bandpresse geführt wird. Die Glastemperatur des Bindemittels liegt unterhalb einer Reaktionstemperatur der Schaum bildenden Komponente bei der Schaumbildung, wobei diese erst ganz kurz vor der Einführung in die Bandpresse aufgebracht wird, so dass die Schaumbildung zum gewünschten Zeitpunkt zwischen den Bändern stattfindet. Hierbei ist präzises Arbeiten insbesondere hinsichtlich des Zugabezeitpunktes der Schaum bildenden Komponente erforderlich und es kann ferner eine Nachbearbeitung des Bauteiles nötig sein.

DE 101 23 176 A1 offenbart ein Verfahren gemäß dem Oberbegriff des Anspruchs 1.

Ausgehend von diesem Stand der Technik ergibt sich die Aufgabe, Mehrschichtmaterialien mit SMC-Schichten in einem Verfahren zu schaffen, das es erlaubt, auch komplexere Strukturen in möglichst wenigen, zeitunkritischen Arbeitsschritten endfertig herzustellen.

Diese Aufgabe wird durch ein Verfahren mit den Merkmalen des Anspruchs 1 gelöst. Weiterbildungen des Verfahrens sind in den Unteransprüchen ausgeführt.

Eine erste Ausführungsform des Verfahrens bezieht sich auf die Fertigung eines SMC-Mehrschicht-Bauteils in einem einzigen Fertigungsvorgang. Dabei wird das Bauteil in Sandwichaufbauweise geschaffen und es weist zwischen zwei SMC-Decklagen eine Schaum-Materialschicht auf.

Das Verfahren umfasst die Schritte des Positionierens einer Einlage-Schichtanordnung mit einer ersten und einer zweiten SMC-Halbzeugdecklage in einer Pressform, wobei die Pressform einen Stempel und eine Matrize aufweist. Sodann erfolgt das Umformen der ersten und der zweiten SMC-Halbzeugdecklage zu zwei SMC-Decklagen, wobei ein Pressdruck auf die Schichtanordnung ausgeübt wird.
Nach erfolgtem Umformen wird die erste und die zweite SMC-Decklage ausgehärtet, beziehungsweise der Aushärteprozess initiiert.
Beim Umformen und zumindest partiellen Aushärten im SMC-Prozess muss verhindert werden, dass sich die beiden SMC-Halbzeugdecklagen, bzw. die SMC-Decklagen beim Aushärteprozess miteinander verbinden, damit sich die dazwischen liegende Schaumschicht ausbilden oder noch aufschäumen kann. Dies wird durch Trennfolien, Trennkörper oder dergleichen zwischen den beiden SMC-Lagen erreicht. Insbesondere werden die Formkörper oder die Trennfolien so angeordnet, dass sie aus der Werkzeuggeometrie heraus ragen. Der Überstand kann dann zwischen zwei umlaufenden Niederhaltern eingeklemmt werden. Somit wird eine Trennebene gebildet. Nachdem zumindest die werkzeugnahen Randschichten der SMC-Decklagen ausgehärtet sind, wird der Schaumbildungsprozess zwischen den SMC-Decklagen initiiert.
Der Schaumbildungsprozesses umfasst das bereitstellen eines zwischen den zwei SMC-Decklagen angeordneten schäumbaren Materials und das Aufschäumen.
Durch anschließendes oder mit dem Aufschäumen erfolgendes Beabstanden des Stempels von der Matrize, wird dem Kernmaterial der nötige Raum zum Aufschäumen bereitgestellt, bis die gewünschte Dicke des SMC-Mehrschichtbauteils erreicht ist.

Nach erfolgtem Aufschäumen des schäumbaren Materials kann das endgefertigte SMC-Mehrschicht-Bauteil aus der Pressform entnommen werden.

Die Vorgehensweise besteht darin, dass das zwischen den beiden SMC-Decklagen bereitgestellte schäumbare Material ein schäumbarer, formstabiler Formkörper ist, der etwa ein Polyurethanformkörper sein kann und der bereits vor dem Positionieren der Einlage-Schichtanordnung in die Umformpresse zwischen den beiden SMC-Halbzeugdecklagen angeordnet und mit diesen in die Pressform eingelegt und positioniert worden ist. Der schäumbare, formstabile Formkörper erfüllt dabei auch die Funktion eines Trennkörpers zwischen den beiden SMC-Lagen. Dann muss lediglich der AufschäumVorgang initiiert werden, was sich bei der Verwendung eines Formkörpers auf besonders leichte Weise dadurch realisieren lässt, dass ein Wärmeeintrag in den schäumbaren Formkörper erfolgt, beispielsweise durch bereits im Vorfeld in den Formkörper eingelegte Heizdrähte erfolgt. Selbstverständlich sind weitere, nachfolgend genannte Verfahrensschritte zum in Gang Setzen des Aufschäumens denkbar.

Die Einlage-Schichtanordnung aufweist zwischen der ersten und der zweiten SMC-Halbzeugdecklage zwei benachbart zueinander angeordnete, aber miteinander nicht verbindbare Trenn-Folienlagen. Diese beiden Trenn-Folienlagen bewirken, dass bei dem Umformen verhindert wird, dass sich die erste und die zweite SMC-Halbzeugdecklage miteinander verbinden; vielmehr sind die Trenn-Folienlagen aus einer derart beschaffenen Folie hergestellt, dass sich jeweils eine der beiden Trenn-Folienlagen mit der ersten und die andere mit der zweiten SMC-Halbzeugdecklage dauerhaft verbindet. Nun kann zugleich das Beabstanden des Stempels und der Matrize der Pressvorrichtung voneinander erfolgen, während zwischen den beiden durch Trenn-Folienlagen voneinander getrennten SMC-Decklagen das schäumbare Material bereitgestellt wird, unmittelbar gefolgt vom Initiieren des Aufschäumens. Das aufschäumende Material füllt den Abstand zwischen den beiden Trenn-Folienlagen, die mit den SMC-Decklagen verbunden sind, es erhärtet und somit liegt das SMC-Mehrschicht-Bauteil endgefertigt in der Pressform vor.

Die Vorgehensweise kann vorgesehen sein, dass die Einlage-Schichtanordnung zwischen der ersten und der zweiten SMC-Halbzeugdecklage Endlosfasern oder auch Langfasern aufweist. Fasern sind grundsätzlich auch in der SMC-Masse, die vorliegend als Folie die Halbzeugdecklage bereitstellt, enthalten. Übliche SMC-Massen enthalten vernetzungsfähige Harze in einer Menge in einem Bereich um etwa 8 bis 15 %, bezogen auf das Gesamtgewicht der Masse, mineralische Füllstoffe, z. B. Kreide oder Gesteinsmehle in einem Bereich von etwa 38 bis 50 % und Faserstoffe wie etwa Glasfasern. Bekannte Zusammensetzungen umfassen entsprechend etwa 30 % Glasfasern, bezogen auf das Gesamtgewicht der Masse. Weiter ist es möglich, Additive hinzuzufügen, die ein unerwünschtes Schwinden reduzieren, Inhibitoren, die eine definierte Vernetzung der Harze erlauben und weitere Zusatzstoffe.

Geeigneter Weise wird die Folie, die die beiden Trenn-Folienlagen bei der zweiten Verfahrensvariante bereitstellt, eine Schmelztemperatur aufweisen, die über der Temperatur liegt, die zum Ausführen der Umformung der ersten und der zweiten SMC-Halbzeugdecklage zu den SMC-Decklagen erforderlich ist.

Das Einführen des schäumbaren Materials zwischen die beiden Trenn-Folienlagen kann mittels einer geeigneten Vorrichtung geschehen, die eine entsprechende Einspritzdüse aufweist. Der Schaum, der nach Initiieren des Aufschäumens aus dem schäumbaren Material entsteht, verbindet sich dauerhaft mit den Trenn-Folienlagen, die wiederum dauerhaft mit den SMC-Decklagen verbunden sind.

In der ersten Ausführungsvariante, in der durch den aufschäumbaren Formkörper der Schaum zwischen den beiden Decklagen bereitgestellt wird, wird dieser ebenfalls mit den SMC-Decklagen unmittelbar und dauerhaft verbunden.

Während bei der Variante des Aufschäumens eines Formkörpers mit bereits in dem Formkörper vorliegenden Heiz- oder Widerstandsdrähten zur Initiierung einer Temperaturerhöhung, die in dem Aufschäumvorgang resultiert, gearbeitet werden kann, können zum Initiieren der Schaumbildung bei einzuspritzendem schäumbaren Material Initiiervorgänge wie Wärmeerzeugung von außen, Wärmezuführung, Eintragen von Energie in das schäumende Material durch Einkopplung von Mikrowellen oder durch Ultraschallwellen oder auch photochemische Verfahren gewählt werden.

In beiden Ausführungsalternativen wird jedenfalls in einem Arbeitsschritt ein präzise gefertigtes Leichtbauteil hergestellt, dessen innere Schaumschicht nach Sandwichart von exakt geformten SMC-Decklagen bedeckt ist, die den Schaum zwischen sich dauerhaft aufnehmen, so dass sich Verbindungs-, respektive Fügeoperationen, etwa durch Einpassen und Verkleben, erübrigen.

Diese und weitere Vorteile werden durch die nachfolgende Beschreibung unter Bezug auf die begleitenden Figuren dargelegt.

Der Bezug auf die Figuren in der Beschreibung dient der Unterstützung der Beschreibung und dem erleichterten Verständnis des Gegenstands. Gegenstände oder Teile von Gegenständen, die im Wesentlichen gleich oder ähnlich sind, können mit denselben Bezugszeichen versehen sein. Die Figuren sind lediglich eine schematische Darstellung einer Ausführungsform der Erfindung.

Dabei zeigt:
- Fig. 1: eine Querschnittsansicht eines erfindungsgemäßen SMC-Mehrschichtaufbaus in einer Presse vor der Aufschäumung der Schaum bildenden Materialschicht,
- Fig. 2: eine Querschnittsansicht eines erfindungsgemäßen SMC-Mehrschichtaufbaus in einer Presse nach der Aufschäumung der Schaum bildenden Materialschicht.

Grundsätzlich bezieht sich das erfindungsgemäße Verfahren auf die Fertigung eines SMC-Mehrschicht-Bauteils in einem einzigen Fertigungsvorgang, der in einer Pressform ausgeführt wird. Dabei handelt es sich nicht um eine Bandpresse. Das Bauteil ist nach Sandwich-Bauart geschaffen und hat eine Schaum-Materialschicht, die zwischen zwei SMC-Decklagen eingebettet ist. Eine Vorgehensweise umfasst zur Schaffung des SMC-Mehrschicht-Bauteils das Positionieren einer Einlage-Schichtanordnung, die aus wenigstens zwei SMC-Halbzeugdecklagen besteht, in einer Pressform, die geeigneter Weise über einen Stempel und eine Matrize verfügt. Nun werden die erste und die zweite SMC-Halbzeugdecklage zu je einer SMC-Decklage in der gewünschten Endgeometrie umgeformt, was erreicht wird, indem das SMC-Material unter Druck zum Fließen gebracht wird. Durch Wärmeeinwirkung des beheizten Werkzeuges härtet das SMC-Material aus. Der Aushärtevorgang muss hier noch nicht vollständig abgeschlossen werden. Es reicht aus, die SMC-Decklagen nur so weit zu härten, dass sie das Öffnen der Pressform und das Einbringen des schäumbaren Materials unbeschadet überstehen. Die End-Aushärtung kann dann zusammen mit dem Aufschäumen des schäumbaren Materials erfolgen. So wird aus jeder der beiden SMC-Halbzeugdecklagen eine SMC-Decklage hergestellt. Die Pressformkomponenten Stempel und Matrize können nunmehr voneinander beabstandet werden, bis der dazwischen bereitgestellte Abstand hinreichend groß ist, um einer Schaum-Materialschicht zwischen den beiden SMC-Decklagen den gewünschten Raum zu geben. Ist ein schäumbares Material zwischen den beiden SMC-Decklagen bereitgestellt, so kann durch Initiieren eines Schaumbildungsprozesses das schäumbare Material aufgeschäumt werden und den durch die Beabstandung von Matrize und Stempel erreichten Raum ausfüllen. Sobald das Aufschäumen beendet ist, kann das endgefertigte SMC-Mehrschicht-Bauteil aus der Pressform entnommen werden.

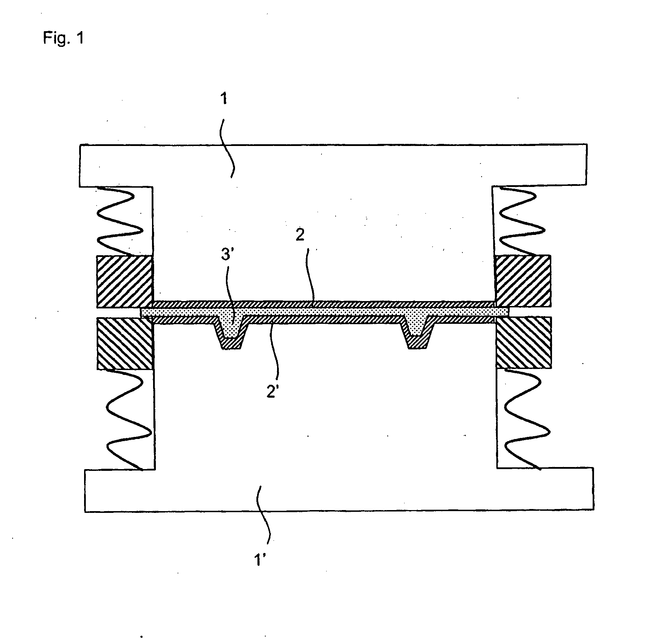

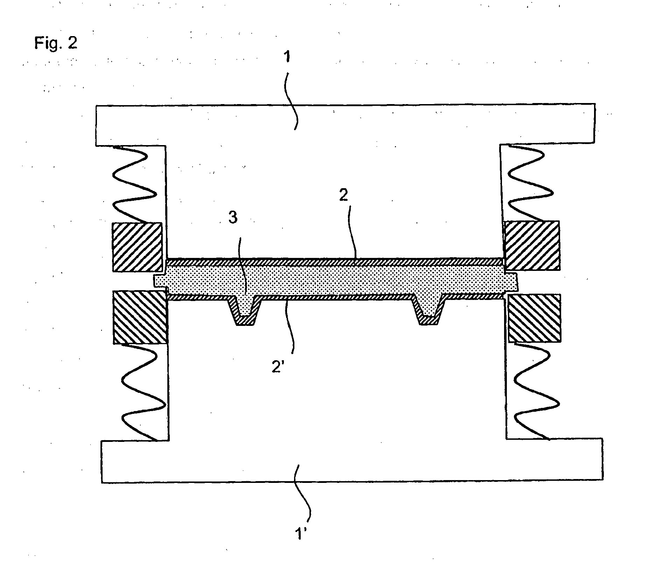

Eine derartige Pressform ist in Fig. 1 und 2 gezeigt; dort wird das erfindungsgemäße Verfahren anhand der Variante mit der Verwendung eines schäumbaren formstabilen Formkörpers ausgeführt. Der schäumbare Formkörper 3', siehe Fig. 1, wird bereits perfekt positioniert zwischen den beiden SMC-Halbzeugdecklagen 2, 2' angeordnet, ehe diese als Einlage-Schichtanordnung in der Pressform positioniert werden. Der schäumbare Formkörper 3' liegt zwischen den SMC-Halbzeugdecklagen, während diese durch Aufbringen des entsprechenden Pressdrucks umgeformt werden.

Werden Stempel 1 und Matrize 1' nun voneinander beabstandet, wie in Fig. 2 gezeigt, und wird der Schaumbildungsprozess hervorgerufen, so expandiert der Formkörper 3' und bildet den Formschaum 3, der den Raum zwischen den beiden Decklagen 2,2' vollständig ausfüllt.

Dabei bindet der Schaum dauerhaft an den ihm zugewandten Seiten der SMC-Decklagen, so dass ein Verkleben oder Verbinden des Schaums auf andere Weise mit den Decklagen sich erübrigt und insofern keine weiteren Verbindungsprozesse zwischen Schaum und Decklagen auszuführen sind. Die Schaumbildung kann, figurativ nicht gezeigt, durch in dem schäumbaren Formkörper bereits bereitgestellte Heizdrähte hervorgerufen werden, die mit einer entsprechenden Heizquelle verbunden sind.

Es ist ferner denkbar, dass die Schäumreaktion durch eine prozessintegrierte Wärmeleitung initiiert wird.

Grundsätzlich sind zum Bewirken des Aufschäumens aber auch andere Reaktionsmechanismen denkbar, die etwa die Einkopplung von Energie in Form von Mikro- oder Ultraschallwellen, Erwärmung durch im Schaumkörper integrierte Widerstandsheizungen oder -drähte oder photochemische Reaktionsmechanismen.

Figurativ nicht dargestellt ist die erfindungsgemäße Verfahrensform, in der zwischen den beiden SMC-Lagen Folien-Lagen angeordnet sind, die bewirken, dass sich die beiden SMC-Halbzeugdecklagen während und nach dem Umform-, respektive Aushärtevorgang, nicht direkt miteinander verbinden können. Die Trenn-Folien sind derart gestaltet, dass sich die den SMC-Schichten zugewandten Seiten während des Aushärteprozesses nach dem Umformen desselben mit dem SMC-Material dauerhaft verbinden. Zugleich sind die Folien derart temperaturbeständig, dass sie während des SMC-Umformprozesses nicht beschädigt werden. Sobald die SMC-Decklagen ausgeformt und ausgehärtet sind, können während des Beabstandens des Stempels von der Matrize der entsprechenden Pressform über entsprechend angeordnete Einspritzdüsen schäumbare Materialien zwischen den beiden Trenn-Folien eingeführt werden. Zugleich können Stempel und Matrix bis zu einem gewünschten Abstand voneinander beabstandet werden und eine mit Schaum auffüllbare Kavität bereitstellen. Das eingespritzte, aufschäumbare Material verbindet sich während des Aufschäumens dauerhaft mit den Trenn-Folienlagen, die wiederum dauerhaft mit den SMC-Decklagen verbunden sind. Nach aushärten Lassen der Schaumschicht kann auch hier das Bauteil entnommen werden.

## Patentansprüche

1. Verfahren zur Fertigung eines SMC-Mehrschicht-Bauteils in einem Fertigungsvorgang, wobei das Bauteil einen Sandwichaufbau hat und zumindest eine Schaum-Materialschicht (3) zwischen zwei SMC-Decklagen (2,2') eingebettet ist, umfassend die Schritte
a) Positionieren einer Einlage-Schichtanordnung umfassend zumindest eine erste und eine zweite SMC-Halbzeugdecklage (2,2') in einer Pressform umfassend einen Stempel (1) und eine Matrize (1'),
b) Umformen einer ersten und einer zweiten SMC-Halbzeugdecklage (2,2') zu zwei SMC-Decklagen (2,2') unter Aufbringen eines Pressdruckes auf die Schichtanordnung, und
c) Initiieren der Aushärtung der ersten und der zweiten SMC-Halbzeugdecklage (2,2'),
d) Beabstanden des Stempels (1) und der Matrize (1') voneinander, bis der dazwischen bereitgestellte Abstand einer Dicke des zu fertigenden SMC-Mehrschicht-Bauteils entspricht, und
e) Initiieren eines Schaumbildungsprozesses eines zwischen den zwei SMC-Decklagen (2,2') bereitgestellten schäumbaren Materials (3') und Erzeugen der Schaum-Materialschicht (3) und
f) nach Beenden des Aufschäumens Entnehmen des SMC-Mehrschicht-Bauteils aus der Pressform.
**dadurch gekennzeichnet, dass**
- die Einlage-Schichtanordnung zwischen der ersten und der zweiten SMC-Halbzeugdecklage (2,2') zwei benachbart zueinander angeordnete und miteinander nicht verbindbare Trenn-Folienlagen aufweist, und
- sich bei dem Umformen der ersten und der zweiten SMC-Halbzeugdecklage (2,2') zu den zwei SMC-Decklagen (2,2') die erste der zwei Trenn-Folienlage mit der ersten SMC-Decklage (2) und die zweite Trenn-Folienlage mit der zweiten SMC-Decklage (2') dauerhaft verbindet, und wobei
das zwischen den zwei SMC-Decklagen (2,2') bereitgestellte schäumbare Material (3') während des Beabstandens des Stempels (1) und der Matrize (1') voneinander zwischen die zwei Trenn-Folienlagen eingespritzt wird.

2. Verfahren nach Anspruch 1,
**dadurch gekennzeichnet, dass**
das zwischen den zwei SMC-Decklagen (2,2') bereitgestellte schäumbare Material (3') ein schäumbarer formstabiler Formkörper (3'), insbesondere ein Polyurethan-Formkörper ist, und wobei
der schäumbare Formkörper (3') vor dem Positionieren der Einlage-Schichtanordnung in einer Pressform zwischen den zwei SMC-Halbzeugdecklagen (2,2') angeordnet worden ist.

3. Verfahren nach zumindest einem der vorstehenden Ansprüche,
**dadurch gekennzeichnet, dass**
die Einlage-Schichtanordnung zwischen der ersten und der zweiten SMC-Halbzeugdecklage (2,2') Endlosfasern oder Langfasern aufweist.

4. Verfahren nach zumindest einem der Ansprüche 2 oder 3,
**dadurch gekennzeichnet, dass**
eine Folie zur Bereitstellung der zwei Trenn-Folienlagen eine Schmelztemperatur aufweist, die über einer zum Ausführen der Umformung der ersten und der zweiten SMC-Halbzeugdecklage (2,2') zu den zwei SMC-Decklagen (2,2') erforderlichen Temperatur liegt.

5. Verfahren nach zumindest einem der vorstehenden Ansprüche,
**dadurch gekennzeichnet, dass**
das Initiieren der Schaum-Bildung des schäumbaren Materials (3') durch Wärmeerzeugung, Wärmezuführung, oder durch Energieeintrag in das schäumbare Material, insbesondere durch Einkopplung von Mikrowellen oder durch Ultraschallwellen, bereitgestellt wird.

6. Verfahren nach Anspruch 5,
**dadurch gekennzeichnet, dass**
das Initiieren der Schaum-Bildung des schäumbaren Formkörpers (3) durch Wärmezuführung mittels in dem Formkörper (3) verlegter Heizdrähte erfolgt.

7. Verfahren nach einem der voran gegangenen Ansprüche,
**dadurch gekennzeichnet, dass**
die Schritte d) und e) gleichzeitig durchgeführt werden.

8. Verfahren nach einem der voran gegangenen Ansprüche,
**dadurch gekennzeichnet, dass**
die vollständige Aushärtung der ersten und der zweiten SMC-Halbzeugdecklage (2,2') erst im Schritt e) abgeschlossen wird.

## Claims

1. Method for producing an AMC multilayer component in a manufacturing process, wherein the component has a sandwich construction and wherein at least one foam material layer (3) is embedded between two SMC cover layers (2, 2'), the method comprising the steps of:
a) positioning an insert layer arrangement comprising at least a first and a second SMC semi-finished cover layer (2, 2') in a press mould comprising an upper die (1) and a lower die (1'),
b) forming a first and a second SMC semi-finished cover layer (2, 2') into two SMC cover layers (2, 2') by applying a pressing pressure to the layer arrangement, and
c) initiating the hardening of the first and the second SMC semi-finished cover layer (2, 2'),
d) moving the upper die (1) and the lower die (1') away from one another until the distance provided in between corresponds to a thickness of the SMC multilayer component to be produced, and
e) initiating a foaming process of a foamable material (3') provided between the two SMC cover layers (2, 2') and producing the foam material layer (3), and
f) on completion of the foaming process, removing the SMC multilayer component from the press mould,
**characterised in that**
- the insert layer arrangement between the first and the second SMC semi-finished cover layer (2, 2') comprises two release film layers arranged adjacent to one another and not connectable to one another, and
- when forming the first and the second SMC semi-finished cover layer (2, 2') into the two SMC cover layers (2, 2'), the first of the two release film layers is permanently joined to the first SMC cover layer (2) and the second release film layer is permanently joined to the second SMC cover layer (2'), and **in that**
- the foamable material (3') provided between the two SMC cover layers (2, 2') is injected between the two release film layers while the upper die (1) and the lower die (2) move away from one another.

2. Method according to claim 1,
**characterised in that**
the foamable material (3) provided between the two SMC cover layers (2, 2') is a foamable, dimensionally stable moulding (3'), in particular a polyurethane moulding, and **in that**
the foamable moulding (3') is arranged between the two SMC semi-finished cover layers (2, 2') before the insert layer arrangement is positioned in a press mould.

3. Method according to one or more of the preceding claims,
**characterised in that**
the insert layer arrangement between the first and the second SMC semi-finished cover layer (2, 2') comprises continuous fibres or long fibres.

4. Method according to one or more of claim 2 or 3,
**characterised in that**
the film for the provision of the two release film layers has a melting temperature above a temperature required for carrying out the forming of the first and the second SMC semi-finished cover layer (2, 2') into the two SMC cover layers (2, 2').

5. Method according to one or more of the preceding claims,
**characterised in that**
the foaming of the foamable material (3') is initiated by heat generation, heat supply or energy input into the foamable material, in particular by coupling in microwaves or by ultrasound waves.

6. Method according to claim 5,
**characterised in that**
the foaming of the foamable moulding (3) is initiated by supplying heat by means of heating wires installed in the moulding (3).

7. Method according to any of the preceding claims,
**characterised in that**
steps d) and e) are carried out simultaneously.

8. Method according to any of the preceding claims,
**characterised in that**
the complete hardening of the first and the second SMC semi-finished cover layer (2, 2') is only concluded in step e).

## Revendications

1. Procédé destiné à fabriquer un composant multicouches SMC dans un processus de fabrication, le composant ayant une structure en sandwich et au moins une couche de matériau de mousse (3) étant insérée entre deux couches de recouvrement SMC (2, 2'). Ledit procédé comprend les étapes suivantes :
a) positionnement d'un agencement en couche intercalé comprenant au moins une première et une seconde couche de recouvrement de demi-produit SMC (2, 2') dans un moule comprenant un poinçon (1) et une matrice (1'),
b) transformation d'une première et d'une seconde couche de recouvrement de demi-produit SMC (2, 2') en deux couches de recouvrement SMC (2, 2') par application d'une pression de pressage sur l'agencement en couche, et
c) initiation du durcissement de la première et de la seconde couche de recouvrement de demi-produit SMC (2, 2'),
d) espacement du poinçon (1) et de la matrice (1') jusqu'à ce que l'espacement mis en place entre les deux corresponde à une épaisseur du composant multicouches SMC à fabriquer, et
e) commencement d'un processus de formation de mousse d'un matériau (3') expansible mis en place entre les deux couches de recouvrement SMC (2, 2'), et production de la couche de matériau de mousse (3) et
f) après l'achèvement du moussage, prélèvement du composant multicouches SMC du moule, **caractérisé en ce que** l'agencement en couche intercalé entre la première et la seconde couche de recouvrement de demi-produit SMC (2, 2') présente deux couches de film de séparation voisines et ne pouvant pas être reliées entre elles, et lors de la transformation de la première et de la seconde couche de recouvrement de demi-produit SMC (2, 2') en deux couches de recouvrement SMC (2, 2') la première des deux couches de film de séparation se relie de manière durable à la première couche de recouvrement SMC (2) et la seconde couche de film de séparation à la seconde couche de recouvrement SMC (2'), et le matériau (3') expansible mis en place entre les deux couches de recouvrement SMC (2, 2') est injecté pendant l'espacement du poinçon (1) et de la matrice (1') entre les deux couches de film de séparation.

2. Procédé selon la revendication 1, **caractérisé en ce que** le matériau (3') expansible mis en place entre les deux couches de recouvrement SMC (2, 2') est un corps moulé (3') indéformable expansible, en particulier un corps moulé en polyuréthane, et ledit corps moulé (3') expansible ayant été disposé entre les deux couches de recouvrement de demi-produit (2, 2') avant le positionnement de l'agencement en couche intercalé dans le moule.

3. Procédé selon au moins l'une quelconque des revendications précédentes, **caractérisé en ce que** l'agencement en couche intercalé présente entre la première et la seconde couche de recouvrement de demi-produit SMC (2, 2') des fibres continues ou des fibres longues.

4. Procédé selon au moins l'une des revendications 2 ou 3, **caractérisé en ce qu'**un film destiné à la mise en place des deux couches de film de séparation présente une température de fusion, qui est supérieure à une température nécessaire à l'exécution de la transformation de la première et la seconde couche de recouvrement de demi-produit SMC (2, 2') en deux couches de recouvrement SMC (2, 2').

5. Procédé selon au moins l'une quelconque des revendications précédentes, **caractérisé en ce que** le début de la formation de mousse du matériau (3') expansible est mis en oeuvre par la production de chaleur, l'amenée de chaleur ou par l'apport d'énergie dans le matériau expansible, en particulier par le couplage de microondes ou par des ondes à ultrasons.

6. Procédé selon la revendication 5, **caractérisé en ce que** le début de la formation de mouse du corps moulé (3) expansible par l'amenée de chaleur s'effectue au moyen de filaments chauffants disposés dans le corps moulé (3).

7. Procédé selon l'une quelconque des revendications précédentes, **caractérisé en ce que** les étapes d) et e) sont réalisées simultanément.

8. Procédé selon au moins l'une quelconque des revendications précédentes, **caractérisé en ce que** le durcissement complet de la première et de la seconde couche de recouvrement de demi-produit SMC (2, 2') ne s'achève qu'à l'étape e).
